# EUROPEAN PATENT APPLICATION

(11) **EP 3 145 147 A1**
(43) Date of publication of application: **22.03.2017**
(21) Application number: 14891969.9
(22) Date of filing: 22.09.2014
(51) Int. Cl.: H04L 29/06

(54) **DATA PROCESSING METHOD AND APPARATUS AND NETWORK DEVICE**

(30) Priority: 16.05.2014 CN 201410210321
(71) Applicant: ZTE Corporation, Shenzhen, Guangdong 518057 (CN)
(72) Inventor: TANG, Chuang, Shenzhen Guangdong 518057 (CN)
(74) Representative: HGF Limited
(86) International application number: PCT/CN2014/087116
(87) International publication number: WO 2015/172493

(57) **Abstract**

Disclosed are a method and apparatus for processing data and a network device, wherein the method for processing data includes: stripping a label switch path (LSP) label of first data to obtain second data having a first pseudo-wire (PW) label, wherein the first data are data of a first network, and the first PW label is a label of the first network; performing label switch on the second data to obtain third data having a second PW label, wherein the second PW label is a label of a second network; encapsulating the third data according to the second network to obtain fourth data, wherein the fourth data are data of the second network; and sending the fourth data to the second network. Through the abovementioned method, data transmission from the first network to the second network is achieved.

## Description

### Technical Field

The present invention relates to the field of communications, and more particularly, to a method and apparatus for processing data and a network device.

### Background of the Invention

With the evolution of network convergence and the development of device integration, various technologies such as optical layer (e.g., wavelength division multiplexing (WDM)), optical transport network (OTN) and packet transport layer (e.g., Multi-Protocol Label Switching, referred to as MPLS/transport profile for MPLS (MPLS-TP)) can be used mixedly in a network or in a type of devices.

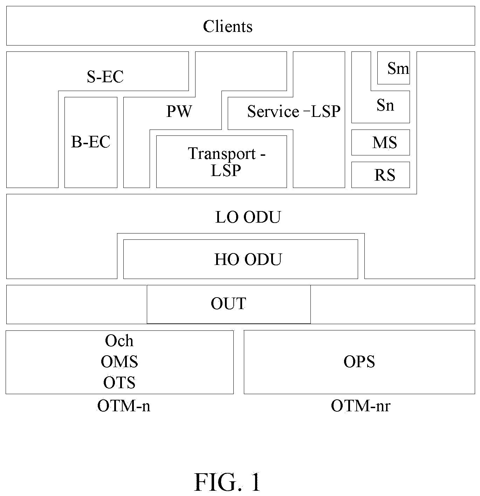

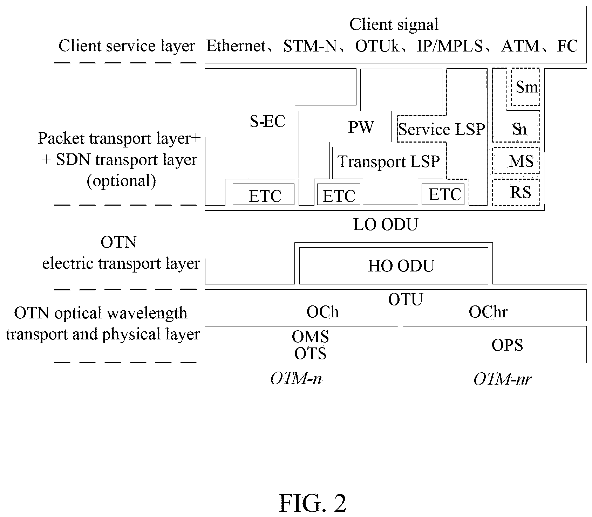

Such converged network hierarchy is defined in standards of both the International Telecommunication Union-Telecommunication Standardization Sector (ITU-T) G.798.1 Appendix IV and the general technical requirements for packet enhanced optical transmission network of the China Communications Standards Association (CCSA), as shown in FIG. 1 and FIG. 2. Different adaptive processing modes used by client services are defined in both standards. According to the definitions in both standards, service adaptation from the MPLS/MPLS-TP to the OTN can be performed by the following several modes:
Mode 1: service - Pseudo Wire (PW) - Label Switch Path (LSP) - Ethernet (ETH) - Optical Channel Data Unit (ODUk);
Mode 2: service-PW-LSP-ODUk; and
Mode 3: service-PW-ODUk.

Because a lot of MPLS/MPLS-TP network devices have been deployed in the network and service encapsulation mode in the MPLS/MPLS-TP network is Service-PW-LSP-ETH, performing the service adaptation using the abovementioned mode 3 when the MPLS/MPLS-TP network and the OTN network are networked together can effectively improve the encapsulation efficiency and can achieve the completeness of service management; at which point, however, because the LSP in the MPLS/MPLS-TP network does not exist in the OTN network, the current standards do not define how the two networks interoperate in such scenario to implement management and maintenance of services in the entire network.

### Summary of the Invention

An embodiment of the present invention provides a method and apparatus for processing data and a network device to solve at least the problem of message adaptation between the MPLS network and the OTN network.

According to an embodiment of the present invention, a method for processing data are provided and comprises: stripping an LSP label of first data to obtain second data having a first PW label, wherein the first data are data of a first network, and the first PW label is a label of the first network; performing label switching on the second data to obtain third data having a second PW label, wherein the second PW label is a label of the second network; encapsulating the third data according to the second network to obtain fourth data, wherein the fourth data are data of the second network; and sending the fourth data to the second network.

According to another embodiment of the present invention, a method for processing data are provided and comprises: stripping ODU overhead of first data to obtain second data having a first PW label, wherein the first data are data of a first network, and the first PW label is a label of the first network; performing label switching on the second data to obtain third data having a second PW label; adding an LSP label to the third data to obtain fourth data; encapsulating the fourth data according to the second network to obtain fifth data, wherein the fifth data are data of the second network; and sending the fifth data to the second network.

According to still another embodiment of the present invention, an apparatus for processing data are provided and comprises: a first stripping module arranged to strip an LSP label of first data to obtain second data having a first PW label, wherein the first data are data of a first network, and the first PW label is a label of the first network; a first processing module arranged to perform label switching on the second data to obtain third data having a second PW label, wherein the second PW label is a label of the second network; a first encapsulating module arranged to encapsulate the third data according to the second network to obtain fourth data, wherein the fourth data are data of the second network; and a first sending module arranged to send the fourth data to the second network.

According to still another embodiment of the present invention, an apparatus for processing data are provided and comprises: a stripping module arranged to strip ODU overhead of first data to obtain second data having a first PW label, wherein the first data are data of the first network, and the first PW label is a label of the first network; a processing module arranged to perform label switching on the second data to obtain third data having a second PW label; an adding module arranged to add an LSP label to the third data to obtain fourth data; an encapsulating module arranged to encapsulate the fourth data according to the second network to obtain fifth data, wherein the fifth data are data of the second network; and a first sending module arranged to send the fifth data to the second network.

According to still another embodiment of the present invention, a network device is provided and comprises: a first processor arranged to strip an LSP label of first data to obtain second data having a first pseudo-wire (PW) label, wherein the first data are data of a first network, and the first PW label is a label of the first network; a switching device arranged to perform label switching on the second data to obtain third data having a second PW label, wherein the second PW label is a label of the second network; a second processor arranged to encapsulate the third data according to the second network to obtain fourth data, which are data of the second network, and send the fourth data to the second network.

According to still another embodiment of the present invention, a network device is provided and comprises: a first processor arranged to strip ODU overhead of first data to obtain second data having a first pseudo-wire (PW) label, wherein, the first data are data of a first network, and the first PW label is a label of the first network; a switching device arranged to perform label switching on the second data to obtain third data having a second PW label; a second processor arranged to add an LSP label to the third data to obtain fourth data; encapsulate the fourth data according to the second network to obtain fifth data, wherein the fifth data are data of the second network; and send the fifth data to the second network.

Through the embodiments of the present invention, the LSP label of the first data of the first network is stripped to obtain second data having the PW label of the first network; label switching is performed on the second data to obtain the third data having the PW label of the second network; the third data are encapsulated according to the second network to obtain fourth data of the second network; and the fourth data are sent to the second network. Data transmission from the first network, which is a MPLS/MPLS-TP network, to the second network, which is an OTN network, is achieved.

### Brief Description of the Drawings

The accompanying drawings described herein are intended to provide a further understanding of the present invention and form a part of the present application. The exemplary embodiments of the present invention and description thereof are used to explain the present invention and not to limit the present invention improperly. In the accompanying drawings:
FIG. 1 is a schematic diagram of a network architecture defined in the ITU-T according to the related art;
FIG. 2 is a schematic diagram of a network architecture defined in the CCSA according to the related art;
FIG. 3 is the first flow chart of a method for processing data in accordance with an embodiment of the invention;
FIG. 4 is a flow chart of a preferred method for processing data in accordance with an embodiment of the present inventive;
FIG. 5 is the first block diagram of an apparatus for processing data in accordance with an embodiment of the present invention;
FIG. 6 is the second flow chart of a method for processing data in accordance with an embodiment of the present invention;
FIG. 7 is the second block diagram of an apparatus for processing data in accordance with an embodiment of the present invention;
FIG. 8 is a block diagram of a network device in accordance with an embodiment of the present invention;
FIG. 9 is a block diagram of a preferred apparatus for processing data in accordance with an embodiment of the present invention;
FIG. 10 is a schematic diagram of networking of MPLS and OTN in accordance with the first embodiment of the present invention;
FIG. 11 is a schematic diagram of an OTN adaptation process in accordance with the first embodiment of the present invention;
FIG. 12 is a schematic diagram of networking of MPLS and OTN in accordance with the second embodiment of the present invention; and
FIG. 13 is a schematic diagram of an OTN adaptation process in accordance with the second embodiment of the present invention.

### Preferred Embodiments of the Invention

The present invention will be described in detail hereinafter in conjunction with the accompanying drawings and embodiments. It should be noted that, in the case of no conflict, embodiments and features in the embodiments of the present application may be combined with each other.

In the following embodiments, first, second and the like do not constitute a limitation to the preferred order. In the following embodiments, the first network may be a MPLS/MPLS-TP network, and the second network may be an OTN network. It can be foreseen that the methods and apparatuses in the following embodiments may be implemented by computer programs or by hardware such as Field Programmable Gate Arrays (FPGAs) or network processors (NPs). The hardware implementation may be to sinter programs implementing the following methods into the FPGAs, but not limited thereto.

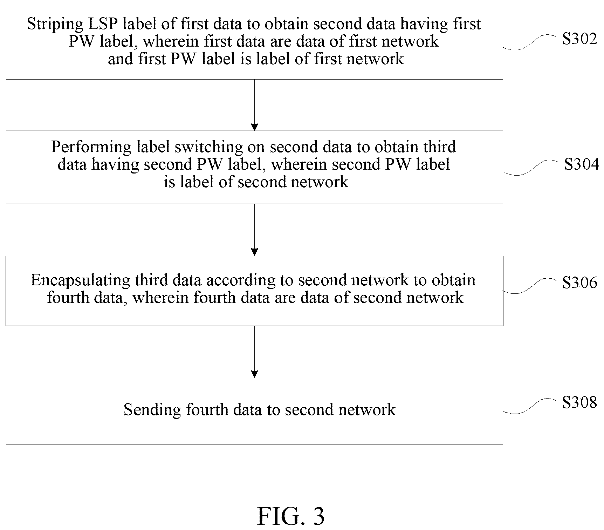

FIG. 3 is the first flow chart of a method for processing data in accordance with an embodiment of the present invention. As shown in FIG. 3, the method comprises steps S302 to S308.

In step S302, an LSP label of first data are stripped to obtain second data having a first PW label, wherein the first data are data of a first network, and the first PW label is a label of the first network.

In the embodiment of the present invention, stripping the LSP label of the first data may comprise stripping a bottom-layer message header of the first data. The bottom-layer message header comprises a MAC header or an SDH header, but is not limited thereto. The bottom-layer message header is determined by a transmission method used by the first network. After the bottom-layer message header is stripped, data having the LSP label is obtained. The data has the PW label of the first network internally.

In step S304, label switching is performed on the second data to obtain third data having a second PW label, wherein the second PW label is a label of the second network.

In the embodiment of the present invention, if the PW label of the first network does not conflict with the PW label of the second network, label switching is performed on the second data, and the third data may use the PW label of the first network.

In step S306, the third data are encapsulated according to the second network to obtain fourth data, wherein the fourth data are data of the second network.

In the embodiment of the present invention, ODU overhead may be added to the third data and the OTU overhead may be further increased to obtain the fourth data. However, embodiments of the present invention are not limited thereto.

In step S308, the fourth data are sent to the second network.

Through the embodiment of the present invention, the LSP label of the first data of the first network is stripped to obtain second data having the PW label of the first network; label switching is performed on the second data to obtain the third data having the PW label of the second network; the third data are encapsulated according to the second network to obtain fourth data of the second network; and the fourth data are sent to the second network. Data transmission from the first network, which is a MPLS/MPLS-TP network, to the second network, which is an OTN network, is achieved.

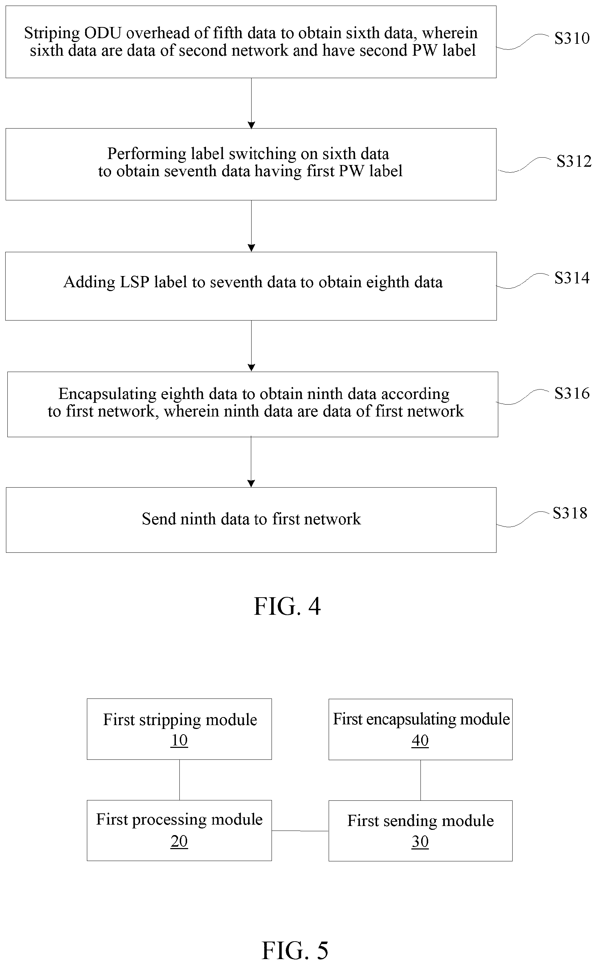

In one implementation of the embodiment of the present invention, the data of the second network may also be processed so as to be sent to the first network. As shown in FIG. 4, the abovementioned method may further comprise steps S310 to S318.

In step S310, ODU overhead of the fifth data are stripped to obtain sixth data, wherein the sixth data are the data of the second network and have the second PW label.

In step S312, label switching is performed on the sixth data to obtain seventh data having the first PW label.

In step S314, an LSP label is added to the seventh data to obtain eighth data.

In step S316, the eighth data are encapsulated according to the first network to obtain ninth data, wherein the ninth data are the data of the first network.

In step S318, the ninth data are sent to the first network.

Through the method shown in FIG. 4, the ODU overhead of the second network is stripped, label switching is performed on the data having the second PW label to obtain data having the PW label of the first network, then the LSP label is added to the data and the encapsulation of the first network is performed, thereby achieving transmission of the data from the second network to the first network and intercommunication between the networks.

In an implementation of the embodiment of the present invention, the abovementioned method further comprises: receiving a first operation administration and maintenance (OAM) message, wherein the first OAM message is an OAM message of the first network; parsing the first OAM message to obtain a second OAM message, wherein the second OAM message is a OAM message of the second network; and sending the second OAM message to the second network. End-to-end management of the data are achieved through this embodiment.

In an implementation of the embodiment of the present invention, the abovementioned method further comprises: receiving a second OAM message, wherein the second OAM message is an OAM message of the second network; parsing the second OAM message to obtain a first OAM message, wherein the first OAM message is an OAM message of the first network; and sending the first OAM message to the first network. End-to-end management of the data are achieved through this implementation.

In the embodiment of the present invention, connection verification (CV) of the first OAM message corresponds to a trace track identifier (TTI) of the second OAM message, alarm indication and suppression (AIS) of the first OAM message corresponds to AIS of the second OAM message, remote defect indication (RDI) of the first OAM message corresponds to RDI of the second OAM message, message loss measurement (LM) of the first OAM message corresponds to bidirectional error indication (BEI) of the second OAM message, automatic protection switching (APS) of the first OAM message corresponds to APS of the second OAM message, or bidirectional forward detection (BFD) of the first OAM message corresponds to the AIS of the second OAM message.

FIG. 5 is the first block diagram of an apparatus for processing data in accordance with an embodiment of the present invention. As shown in FIG. 5, the apparatus may comprise: a first stripping module 10 arranged to strip an LSP label of first data to obtain second data having a first PW label, wherein the first data are data of a first network, and the first PW label is a label of the first network; a first processing module 20 arranged to perform label switching on the second data to obtain third data having a second PW label, wherein the second PW label is a label of the second network; a first encapsulating module 30 arranged to encapsulate the third data according to the second network to obtain fourth data, wherein the fourth data are data of the second network; and a first sending module 40 arranged to send the fourth data to the second network.

Through the embodiment of the present invention, the LSP label of the first data of the first network is stripped to obtain second data having the PW label of the first network; label switching is performed on the second data to obtain the third data having the PW label of the second network; the third data are encapsulated according to the second network to obtain fourth data of the second network; and the fourth data are sent to the second network. Data transmission from the first network, which is a MPLS/MPLS-TP network, to the second network, which is an OTN network, is achieved.

In an embodiment of the present invention, the abovementioned apparatus may further comprise: a second stripping module arranged to strip ONU overhead of fifth data to obtain sixth data, wherein the sixth data are data of the second network and have the second PW label; a second processing module arranged to perform label switching on the sixth data to obtain seventh data having the first PW label; an adding module arranged to add an LSP label to the seventh data to obtain eighth data; a second encapsulating module arranged to encapsulate the eighth data according to the first network to obtain ninth data, wherein the ninth data are data of the first network; and a second sending module arranged to send the ninth data to the first network.

In an implementation of the embodiment of the present invention, the abovementioned apparatus further comprises: a first receiving module arranged to receive a first OAM message, wherein the first OAM message is an OAM message of the first network; a first parsing module arranged to parse the first OAM message to obtain a second OAM message, wherein the second OAM message is an OAM message of the second network; and a third sending module arranged to send the second OAM message to the second network.

In an implementation of the embodiment of the present invention, the abovementioned apparatus further comprises: a second receiving module arranged to receive the second OAM message, wherein the second OAM message is an OAM message of the second network; a second parsing module arranged to parse the second OAM message to obtain the first OAM message, wherein the first OAM message is an OAM message of the first network; and a fourth sending module arranged to send the first OAM message to the first network.

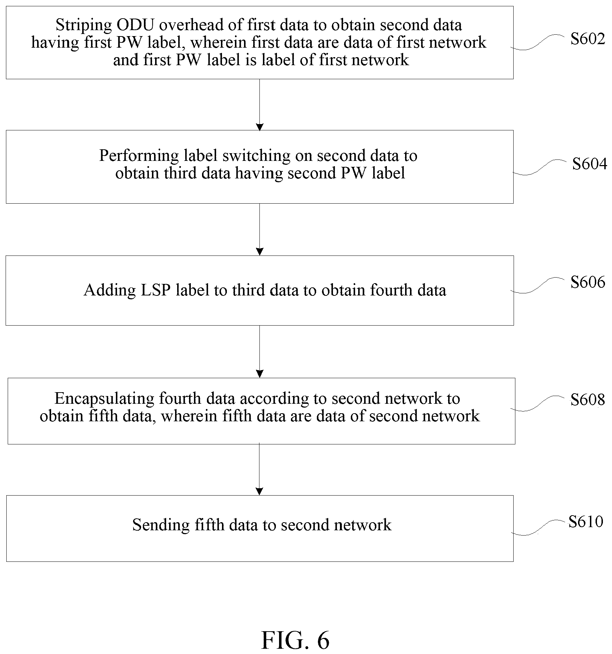

FIG. 6 is the second flow chart of a method for processing data in accordance with an embodiment of the present invention. As shown in FIG. 6, the method may comprise steps S602 to S610.

In step S602, ODU overhead of first data are stripped to obtain second data having a first PW label, wherein the first data are data of a first network and the first PW label is a label of the first network.

In step S604, label switching is performed on the second data to obtain third data having a second PW label.

In step S606, an LSP label is added to the third data to obtain fourth data.

In step S608, the fourth data are encapsulated according to the second network to obtain fifth data, wherein the fifth data are data of the second network.

In step S610, the fifth data are sent to the second network.

Through the embodiment of the present invention, the ODU overhead of the first network is stripped, label switching is performed on the data having the first PW label to obtain the data having the second network PW label, and then the LSP label is added to the data and the encapsulation of the second network is performed, thereby achieving transmission of the data from the first network to the second network and intercommunication between the networks.

In an implementation of the embodiment of the present invention, the abovementioned method may further comprise the steps shown in FIG. 3 to enable the intercommunication between the second network and the first network.

In the embodiment of the present invention, the abovementioned method may further comprise: receiving a first OAM message, wherein the first OAM message is an OAM message of the first network; parsing the first OAM message to obtain a second OAM message, wherein the second OAM message is an OAM message of the second network; and sending the second OAM message to the second network.

In the embodiment of the present invention, the abovementioned method may further comprise: receiving the second OAM message, wherein the second OAM message is an OAM message of the second network; parsing the second OAM message to obtain the first OAM message, wherein the first OAM message is an OAM message of the first network; and sending the first OAM message to the first network.

In the embodiment of the present invention, connection verification (CV) of the second OAM message corresponds to a trace track identifier (TTI) of the first OAM message, alarm indication and suppression (AIS) of the second OAM message corresponds to AIS of the first OAM message, remote defect indication (RDI) of the second OAM message corresponds to RDI of the first OAM message, message loss measurement (LM) of the second OAM message corresponds to bidirectional error indication (BEI) of the first OAM message, automatic protection switching (APS) of the second OAM message corresponds to APS of the first OAM message, or bidirectional forward detection (BFD) of the second OAM message corresponds to the AIS of the second OAM message.

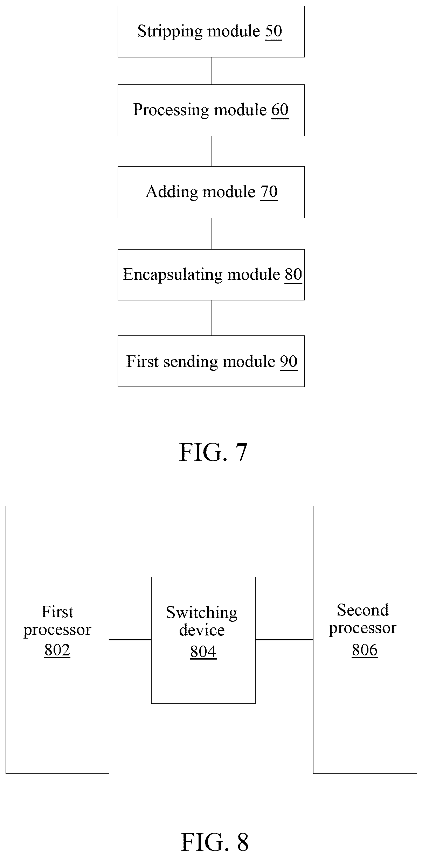

FIG. 7 is the second block diagram of an apparatus for processing data in accordance with an embodiment of the present invention. As shown in FIG. 7, the apparatus may comprise: a stripping module 50 arranged to strip ODU overhead of first data to obtain second data having a first PW label, wherein the first data are data of the first network, and the first PW label is a label of the first network; a processing module 60 arranged to perform label switching on the second data to obtain third data having a second PW label; an adding module 70 arranged to add an LSP label to the third data to obtain fourth data; an encapsulating module 80 arranged to encapsulate the fourth data according to the second network to obtain fifth data, wherein the fifth data are data of the second network; and a first sending module 90 arranged to send the fifth data to the second network.

In an implementation of the embodiment of the present invention, the abovementioned apparatus may further comprise: a first receiving module arranged to receive a first OAM message, wherein the first OAM message is an OAM message of the first network; a first parsing module arranged to parse the first OAM message to obtain a second OAM message, wherein the second OAM message is an OAM message of the second network; and a second sending module arranged to send the second OAM message to the second network.

In an implementation of the embodiment of the present invention, the abovementioned apparatus may further comprise: a second receiving module arranged to receive the second OAM message, wherein the second OAM message is an OAM message of the second network, a second parsing module arranged to parse the second OAM message to obtain the first OAM message, wherein the first OAM message is an OAM message of the first network; and a third sending module arranged to send the first OAM message to the first network.

The preferred embodiment of the present invention will be described below.

In the preferred embodiment, the network or device implements switch scheduling for the TDM (ODUk) and packet (MPLS/MPLS-TP), and supports inter-layer adaptation and mapping multiplexing between multiple layers, thus achieving networks which have unified and flexible transport functions of various services for the packet and the OTN and have OAM, protection and management functions of transmitting characteristics.

In the preferred embodiment, a type of service and OAM adaptation is implemented when the MPLS/MPLS-TP network and the OTN network are networked together.

FIG. 8 is a block diagram of a network device in accordance with an embodiment of the present invention. As shown in FIG. 8, the network device comprises a network processor comprising a first processor 802, a switching device 804, and a second processor 806.

In one implementation of the embodiment of an embodiment of the present invention, the first processor 802 is arranged to strip an LSP label of first data to obtain second data having a first PW label, wherein the first data are data of the first network, and the first PW label is a label of the first network; the switching device 804 is arranged to perform label switching on the second data to obtain third data having a second PW label, wherein the second PW label is a label of the second network; and the second processor 806 is arranged to encapsulate the third data according to the second network to obtain fourth data, which are data of the second network, and send the fourth data to the second network.

Preferably, the second processor 806 is further arranged to strip ODU overhead of the fifth data to obtain sixth data, wherein the sixth data are data of the second network and have a second PW label; the switching device 804 is further arranged to perform label switching on the sixth data to obtain seventh data having the first PW label; the first processor 802 is further arranged to add an LSP label to the seventh data to obtain eighth data, and encapsulate the eighth data according to the first network to obtain ninth data, wherein the ninth data are data of the first network; and the second processor 806 is further arranged to send the ninth data to the first network.

In a preferred embodiment of the present invention, the network processor may further comprise a bridging device arranged to:
receive a first operation, administration and management (OAM) message, wherein the OAM message is an OAM message of the first network; parse the first OAM message to obtain a second OAM message, wherein the second OAM message is an OAM message of the second network; and send the second OAM message to the second network; and/or
receive the second OAM message, wherein the second OAM message is an OAM message of the second network; parse the second OAM message to obtain the first OAM message, wherein the first OAM message is an OAM message of the first network, and send the first OAM message to the first network.

In another implementation of the embodiment of the present invention, the second processor 806 is arranged to strip ODU overhead of the first data to obtain second data having the first PW label, wherein the first data are the data of the first network, and the first PW label is the label of the first network; the switching device 804 is arranged to perform label switching on the second data to obtain the third data having the second PW label; the first processor 802 is arranged to add the LSP label to the third data to obtain the fourth data, encapsulate the fourth data according to the second network to obtain the fifth data, which are the data of the second network, and send the fifth data to the second network.

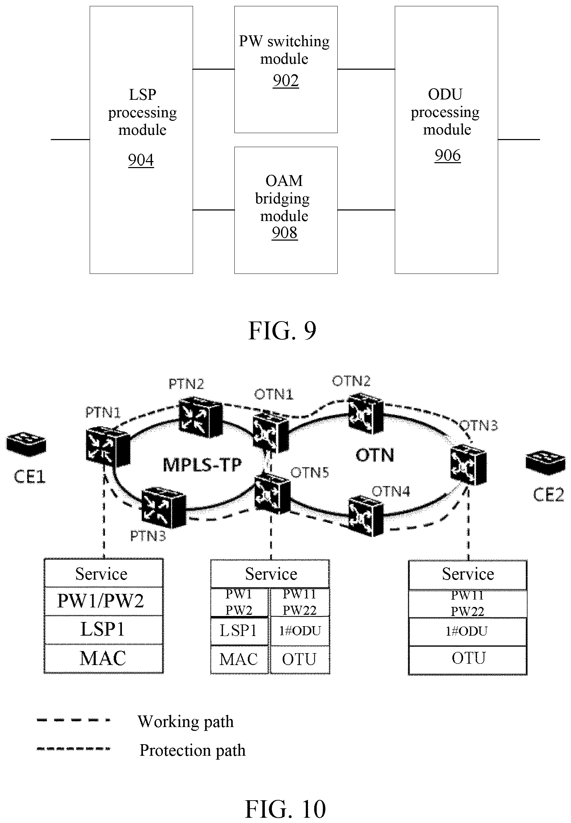

FIG. 9 is a block diagram of a preferred apparatus for processing data in accordance with an embodiment of the present invention. As shown in FIG. 9, the apparatus comprises:
A PW switching module 902 arranged to implement the switching between a PW carried by an LSP and a PW carried by an ODU so as to achieve the integrity of service management. In the case of no conflict, PW labels may not be changed;
An LSP processing module 904 arranged to implement terminating processing of the LSP, including stripping and adding of LSP labels and parsing and sending of LSP OAM messages;
An ODU processing module 906 arranged to implement terminating and regenerating processing of the ODU, including adaptation of the PW to the ODU and processing of the ODU overhead; and
An OAM bridging module 908 arranged to implement bridging between the LSP OAM, which comprises CC/CV, AIS, RDI, LCK, LM and APS, and the ODU OAM, which comprises BDI, BEI, TTI and SATA, and associate with the LSP OAM according to the ODU overhead information.

The embodiments of the present invention will be described in further detail below in conjunction with exemplary examples.

### The first embodiment

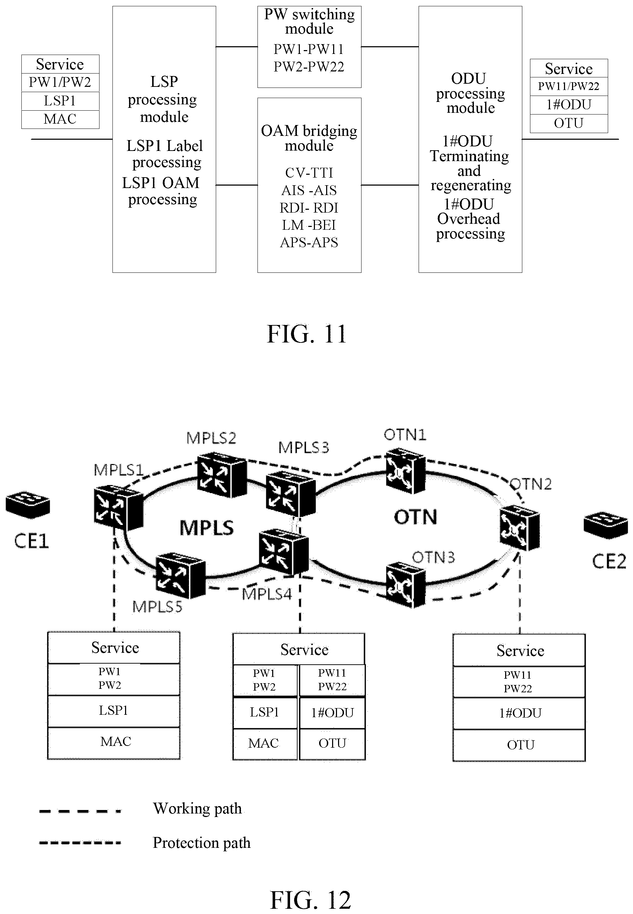

When an MPLS-TP network and an OTN network are networked together, as shown in FIG. 10, services of two users CE1 and CE2 are transmitted through the MPLS-TP and OTN networks. Nodes that a primary path of the services passes through are PTN1 - PTN3 - OTN5 - OTN4 - OTN3, and nodes that a standby path passes through are PTN1 - PTN2 - OTN1 - OTN2 - OTN3. On the two nodes OTN1 and OTN5, the apparatus needs to implement adaptation of the services carried by the MPLS-TP to the OTN. The specific adaptation to the OTN5 is shown in FIG. 11.

A PW switching module implements PW label switching between PW1/PW2 at the MPLS-TP network side and PW11/PW12 at the OTN network side. In the case of no conflict, PW labels may not be changed.

An LSP processing module implements stripping and adding of LSP1 labels at the MPLS-TP network side, completes parsing and transmission of OAM messages of the LSP1, and generates alarm, performance and protection reversing information such as CV, AIS, RDI, LCK, LM and APS according to the OAM messages.

An ODU processing module implements terminating and regenerating processing of the 1#ODU at the OTN network side, and implements adaptation of the PW to the ODU according to standards of the ITU-T G.798.1 Appendix IV and the general technical requirements for packet enhanced optical transmission network of the CCSA, completes ODU overhead processing, and generates alarm, performance and protection reversing information such as AIS, RDI, LCK, TTI, BEI and APS according to contents of the overhead.

An OAM bridge module implements bridging between the LSP OAM and the ODU OAM, and the MPLS-TP network opens OAMs at the LSP level. The specific bridging correspondence is as follows:

| LSP OAM | | ODU OAM |
|---|---|---|
| CV | - | TTI |
| AIS | - | AIS |
| RDI | - | RDI |
| LM | - | BEI |
| APS | - | APS |

The OTN1 node also realizes the adaptation between the MPLS-TP and the OTN on the standby path. End-to-end monitoring of the services between the CE1 and the CE2 in the entire MPLS-TP and OTN networks can be implemented through the adaptation between the two nodes; meanwhile, LSP linear protection can be deployed in the PTN1, ODN linear protection can be deployed in the OTN3, and any node or link fault in the network can implement protection of the services at the tunnel level.

### The second embodiment

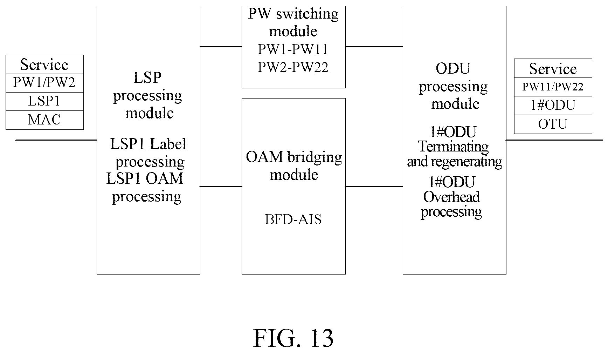

When an MPLS network and an OTN network are networked together, as shown in FIG. 12, services of two users CE1 and CE2 are transmitted through the MPLS and OTN networks. Nodes that a primary path of the services passes through are MPLS1 - MPLS5 - MPLS4 - OTN3 - OTN2, and nodes that a standby path passes through are MPLS1 - MPLS2 - MPLS3 - OTN1 - OTN2. On the two nodes MPLS4 and MPLS3, the apparatus needs to implement adaptation of the services carried by the MPLS to the OTN. The specific adaptation to the MPLS4 is shown in FIG. 13.

A PW switching module implements PW label switching between PW1/PW2 at the MPLS network side and PW11/PW12 at the OTN network side. In the case of no conflict, PW labels may not be changed.

An LSP processing module implements stripping and adding of LSP 1 labels at the MPLS network side, completes parsing and transmission of OAM messages of the LSP1, and generates alarm, performance and protection reversing information such as CV, AIS, RDI, LCK, LM and APS according to the OAM messages.

An ODU processing module implements terminating and regenerating processing of the 1#ODU at the OTN network side, and implements adaptation of the PW to the ODU according to standards of the ITU-T G.798.1 Appendix IV standard and the general technical requirements for packet enhanced optical transmission network of the CCSA, completes ODU overhead processing, and generates alarm, performance and protection reversing information such as AIS, RDI, LCK, TTI, BEI and APS according to contents of the overhead.

An OAM bridge module implements bridging between the LSP OAM and the ODU OAM, and BFD for LSP is deployed in the MPLS network. The specific bridging correspondence is as follows:

| LSP OAM | | ODU OAM |
|---|---|---|
| BFD | - | AIS |

The MPLS3 node also realizes the adaptation between the MPLS and the OTN on the standby path. End-to-end monitoring of the services between the CE1 and the CE2 in the entire MPLS and OTN networks can be implemented through the adaptation between the two nodes; meanwhile, LSP hot-standly protection can be deployed in the MPLSP1, ODN linear 1+1 protection can be deployed in the OTN2, and any node or link fault in the network can implement protection of the services at the tunnel level.

From the above description, it can be seen that the present invention realizes the following technical effects: when the MPLS/MPLS-TP network and the OTN network are networked together, both the LSP and the ODU can be regarded as tunnels, and splicing of different types of tunnels is realized, thereby not only implementing end-to-end management of the PW at the service level, but also implementing end-to-end management and maintenance of the entire network service at the tunnel level, and also implementing the linkage between LSP protection in the MPLS/MPLS-TP network and ODU protection in the OTN network at the same time.

Obviously, those skilled in the art should understand that various modules or steps of the present invention described above may be implemented by general-purpose computing devices that may be centralized on a single computing device or distributed over a network consisting of a plurality of computing devices. Optionally, the modules or steps may be implemented by program codes executable by the computing devices such that they may be stored in storage devices and executed by the computing devices. Moreover, in some cases, the steps shown or described may be performed in an order different from that shown herein. Or the modules or steps can be made separately into individual integrated circuit modules, or some of them can be made into a single integrated circuit module. Thus, the present invention is not limited to any particular combination of hardware and software.

The above description is only preferred embodiments of the present invention and is not intended to limit the present invention. Those skilled in the art should understand that the present invention may have various changes and modifications. Any modifications, equivalent substitutions, improvements and the like made within the spirit and principle of the present invention should be included in the protection scope of the present invention.

### Industrial Applicability

As described above, the method and apparatus for processing data and the network device provided by the embodiment of the present invention have the following beneficial effects: data transmission from the first network, which is a MPLS/MPLS-TP network, to the second network, which is an OTN network, is implemented.

## Claims

1. A method for processing data comprising:
stripping a label switching path (LSP) label of first data to obtain second data having a first pseudo-wire (PW) label, wherein the first data are data of a first network, and the first PW label is a label of the first network;
performing label switching on the second data to obtain third data having a second PW label, wherein the second PW label is a label of the second network;
encapsulating the third data according to the second network to obtain fourth data, wherein the fourth data are data of the second network; and
sending the fourth data to the second network.

2. The method according to claim 1, further comprising:
stripping optical channel data unit (ODU) overhead of fifth data to obtain sixth data, wherein the sixth data are the data of the second network and have the second PW label;
performing label switching on the sixth data to obtain seventh data having the first PW label;
adding an LSP label to the seventh data to obtain eighth data;
encapsulating the eighth data to obtain ninth data according to the first network, wherein the ninth data are the data of the first network; and
sending the ninth data to the first network.

3. The method according to claim 1 or 2, further comprising:
receiving a first operation administration and maintenance (OAM) message, wherein the first OAM message is an OAM message of the first network;
parsing the first OAM message to obtain a second OAM message, wherein the second OAM message is a OAM message of the second network; and
sending the second OAM message to the second network.

4. The method according to any one of claims 1 to 3, further comprising:
receiving the second OAM message, wherein the second OAM message is an OAM message of the second network;
parsing the second OAM message to obtain a first OAM message, wherein the first OAM message is an OAM message of the first network; and
sending the first OAM message to the first network.

5. The method according to claim 3 or 4, wherein a correspondence between the first OAM message and the second OAM message is:
connection verification (CV) of the first OAM message corresponds to a trace track identifier (TTI) of the second OAM message, alarm indication and suppression (AIS) of the first OAM message corresponds to AIS of the second OAM message, remote defect indication (RDI) of the first OAM message corresponds to RDI of the second OAM message, message loss measurement (LM) of the first OAM message corresponds to bidirectional error indication (BEI) of the second OAM message, automatic protection switching (APS) of the first OAM message corresponds to APS of the second OAM message, or
bidirectional forward detection (BFD) of the first OAM message corresponds to the AIS of the second OAM message.

6. A method for processing data comprising:
stripping optical channel data unit (ODU) overhead of first data to obtain second data having a first label switching path (LSP) label, wherein the first data are data of a first network, and the first PW label is a label of the first network;
performing label switching on the second data to obtain third data having a second PW label;
adding an LSP label to the third data to obtain fourth data;
encapsulating the fourth data according to the second network to obtain fifth data, wherein the fifth data are data of the second network; and
sending the fifth data to the second network.

7. The method according to claim 6, further comprising:
receiving a first operation administration and maintenance (OAM) message, wherein the first OAM message is an OAM message of the first network;
parsing the first OAM message to obtain a second OAM message, wherein the second OAM message is a OAM message of the second network; and
sending the second OAM message to the second network.

8. The method according to claims 6 or 7, further comprising:
receiving a second OAM message, wherein the second OAM message is an OAM message of the second network;
parsing the second OAM message to obtain a first OAM message, wherein the first OAM message is an OAM message of the first network; and
sending the first OAM message to the first network.

9. An apparatus for processing data comprising:
a first stripping module arranged to strip a label switch path (LSP) label of first data to obtain second data having a first pseudo wire (PW) label, wherein the first data are data of a first network, and the first PW label is a label of the first network;
a first processing module arranged to perform label switching on the second data to obtain third data having a second PW label, wherein the second PW label is a label of the second network;
a first encapsulating module arranged to encapsulate the third data according to the second network to obtain fourth data, wherein the fourth data are data of the second network; and
a first sending module arranged to send the fourth data to the second network.

10. The apparatus according to claim 9, further comprising:
a second stripping module arranged to strip optical channel data unit (ONU) overhead of fifth data to obtain sixth data, wherein the sixth data are data of the second network and have the second PW label;
a second processing module arranged to perform label switching on the sixth data to obtain seventh data having the first PW label;
an adding module arranged to add an LSP label to the seventh data to obtain eighth data;
a second encapsulating module arranged to encapsulate the eighth data according to the first network to obtain ninth data, wherein the ninth data are data of the first network; and
a second sending module arranged to send the ninth data to the first network.

11. The apparatus according to claim 9 or 10, further comprising:
a first receiving module arranged to receive a first operation administration and maintenance (OAM) message, wherein the first OAM message is an OAM message of the first network;
a first parsing module arranged to parse the first OAM message to obtain a second OAM message, wherein the second OAM message is an OAM message of the second network; and
a third sending module arranged to send a second OAM message to the second network.

12. The apparatus according to any one of claim 9 to 11, further comprising:
a second receiving module arranged to receive the second OAM message, wherein the second OAM message is an OAM message of the second network;
a second parsing module arranged to parse the second OAM message to obtain the first OAM message, wherein the first OAM message is an OAM message of the first network; and
a fourth sending module arranged to send the first OAM message to the first network.

13. An apparatus for processing data comprising:
a stripping module arranged to strip optical channel data unit (ODU) overhead of first data to obtain second data having a first pseudo wire (PW) label, wherein the first data are data of the first network, and the first PW label is a label of the first network;
a processing module arranged to perform label switching on the second data to obtain third data having a second PW label;
an adding module arranged to add an LSP label to the third data to obtain fourth data;
an encapsulating module arranged to encapsulate the fourth data according to the second network to obtain fifth data, wherein the fifth data are data of the second network; and
a first sending module arranged to send the fifth data to the second network.

14. The apparatus according to claim 13, further comprising:
a first receiving module arranged to receive a first operation administration and maintenance (OAM) message, wherein the first OAM message is an OAM message of the first network;
a first parsing module arranged to parse the first OAM message to obtain a second OAM message, wherein the second OAM message is an OAM message of the second network; and
a second sending module arranged to send the second OAM message to the second network.

15. The apparatus according to claim 13 or 14, further comprising:
a second receiving module arranged to receive the second OAM message, wherein the second OAM message is an OAM message of the second network;
a second parsing module arranged to parse the second OAM message to obtain the first OAM message, wherein the first OAM message is an OAM message of the first network; and
a third sending module arranged to send the first OAM message to the first network.

16. A network device comprising:
a first processor arranged to strip a label switch path (LSP) label of first data to obtain second data having a first pseudo-wire (PW) label, wherein the first data are data of a first network, and the first PW label is a label of the first network;
a switching device arranged to perform label switching on the second data to obtain third data having a second PW label, wherein the second PW label is a label of the second network; and
a second processor arranged to encapsulate the third data according to the second network to obtain fourth data, which are data of the second network, and send the fourth data to the second network.

17. The network device according to claim 16, wherein
the second processor is further arranged to strip optical channel data unit (ODU) overhead of fifth data to obtain sixth data, wherein the sixth data are data of the second network and have the second PW label;
the switching device is further arranged to perform label switching on the sixth data to obtain seventh data having the first PW label;
the first processor is further arranged to add an LSP label to the seventh data to obtain eighth data, and encapsulate the eighth data according to the first network to obtain ninth data, wherein the ninth data are data of the first network.

18. The network device according to claim 16 or 17, further comprising a bridging device arranged to:
receive a first operation, administration and management (OAM) message, wherein the first OAM message is an OAM message of the first network; parse the first OAM message to obtain a second OAM message, wherein the second OAM message is an OAM message of the second network; and send the second OAM message to the second network; and/or
receive the second OAM message, wherein the second OAM message is an OAM message of the second network; parse the second OAM message to obtain the first OAM message, wherein the first OAM message is an OAM message of the first network; and send the first OAM message to the first network.

19. A network device comprising:
a first processor arranged to strip optical channel data unit (ODU) overhead of first data to obtain second data having a first pseudo-wire (PW) label, wherein the first data are data of a first network, and the first PW label is a label of the first network;
a switching device arranged to perform label switching on the second data to obtain third data having a second PW label; and
a second processor arranged to add an LSP label to the third data to obtain fourth data, encapsulate the fourth data according to the second network to obtain fifth data, which are data of the second network, and send the fifth data to the second network.
